# EUROPÄISCHE PATENTSCHRIFT

(11) **EP 1 927 487 B1**
(45) Veröffentlichungstag und Bekanntmachung des Hinweises auf die Patenterteilung: **12.06.2013**
(21) Anmeldenummer: 07016050.2
(22) Anmeldetag: 16.08.2007
(51) Int. Cl.: B60G 17/027, B60G 17/005

(54) **Höhenverstellvorrichtung für Radaufhängungen von Kraftfahrzeugen**
Height adjustment device for wheel suspensions in motor vehicles
Dispositif de réglage en hauteur pour suspensions de roues de véhicules automobiles

(30) Priorität: 01.12.2006 DE 102006056760
(43) Veröffentlichungstag der Anmeldung: 04.06.2008
(73) Patentinhaber: AUDI AG, 85045 Ingolstadt (DE)
(72) Erfinder: Michel, Wilfried, 93339 Riedenburg (DE); Beringer, Heinrich, 85095 Denkendorf (DE); Brandl, Hans Jürgen, 86706 Weichering (DE)
(74) Vertreter: Asch, Konrad

(56) Entgegenhaltungen:
- FR-A- 2 312 386
- JP-A- 58 203 243
- JP-A- 58 203 244
- JP-A- 58 211 040
- JP-A- 59 019 736
- JP-A- 59 019 738

## Beschreibung

Die Erfindung betrifft eine Höhenverstellvorrichtung für Radaufhängungen von Kraftfahrzeugen gemäß dem Oberbegriff des Patentanspruches 1.

Eine derartige Höhenverstellvorrichtung für eine Radaufhängung von Kraftfahrzeugen zeigt beispielsweise die DE 103 24 993 A1 anhand einer Gasdruckfeder als Tragfeder und einem gummielastischen Anschlagpuffer, wobei die Höhenverstellvorrichtung und der Anschlagpuffer baulich günstig innerhalb der Tragfeder angeordnet ist. Die Tragfeder kann auch eine Schraubendruckfeder sein. Mit solchen Höhenverstellvorrichtungen kann die Karosserie eines Kraftfahrzeuges in mehrere Niveaustellungen verstellt werden, z. B. in eine Normalniveaustellung, eine Hochniveaustellung für unebenes Gelände und eine Tiefniveaustellung für hohen Geschwindigkeitsbereich. Durch eine geeignete Anordnung des Anschlagpuffers kann dabei zusätzlich die Federrate der Tragfeder erhöht werden. Die Höhenverstellvorrichtung kann hydraulisch oder pneumatisch angesteuert sein.

Weiter ist aus der JP 58203243 A eine Verstellvorrichtung bekannt, mittels der die Federbelastung mittels Öldruck oder Luftdruck eingestellt werden kann, wobei die Federlast nach der Einstelloperation mittels eines Gehäuses und somit bei drucklosgeschaltetem Fluidraum gehalten wird. Ein ähnlicher Aufbau ist auch aus der JP 59019736, der JP 59019738 und der JP 58203244 bekannt.

Aufgabe der Erfindung ist es, eine Höhenverstellvorrichtung der gattungsgemäßen Art vorzuschlagen, die besonders robust, baulich günstig und steuerungstechnisch einfach ausgebildet ist.

Diese Aufgabe wird erfindungsgemäß mit den Merkmalen des Patentanspruches 1 gelöst. Vorteilhafte Weiterbildungen der Erfindung beinhalten die weiteren Patentansprüche.

Erfindungsgemäß wird vorgeschlagen, dass einer Verstelleinrichtung ein Schrittschaltwerk zugeordnet ist. Dieses Schrittschaltwerk weist einen am Federteller verdrehbar geführten Stellring auf, der mittels einer Stellkulisse einer am Aufbau oder an einem Radaufhängungselement abgestützten Führungshülse geführt ist. Bevorzugt ist hierbei der Stellkolben als Ringkolben entlang einer Innenhülse axial verschiebbar geführt. Der Stellkolben kann hierbei auf einen zylindrischen Führungsabschnitt des Federtellers wirken. Mit dieser Ausführung gelingt es, eine innerhalb der Tragfeder einer Radaufhängung liegende, besonders robuste Höhenverstellvorrichtung zu schaffen, die eine Druckbeaufschlagung des Fluidraumes nur zum Umschalten der Niveaustellungen benötigt, ansonsten im Betrieb des Kraftfahrzeuges drucklos sein kann. Die jeweilige Niveaustellung wird vorteilhaft nur über das Schrittschaltwerk gehalten.

Zur Erzielung einer robusten, im Umfangsrichtung gleichmäßigen Abstützung der Niveaustellungen, wird vorgeschlagen, dass um den Umfang der Führungshülse drei zueinander identische Stellkulissen eingearbeitet sind, in die drei in den Stellring um jeweils 120 Grad verteilte Gleitstifte einragen.

Besonders vorteilhaft können die in Umfangsrichtung der Führungshülse schräg verlaufenden, nutförmigen Stellkulissen jeweils eine mit den Gleitstiften zusammenwirkende Stellflanke und eine gegenüberliegende Halteflanke aufweisen. Dies stellt eine zuverlässige Umschaltung der Niveaustellungen bei jeweils vorangehender Druckbeaufschlagung des Fluidraumes und entsprechender Axialverschiebung des Stellkolbens sicher.

Eine besonders präzise Steuerung kann dabei erzielt werden, wenn die Drehwinkellage des Stellringes relativ zur Führungshülse oder zum Federteller mittels eines Drehwinkelsensors erfasst wird.

Eine in radialer Richtung gesehen baulich besonders kompakte Konstruktion wird erzielt, indem der Stellkolben mit einem entgegengesetzt dem Fluidraum angeordneten Stützabschnitt axial unterhalb der Stellkulissen in der Führungshülse mit dem Führungsabschnitt des Federtellers zusammenwirkt.

Ferner kann der Stellring mit einem angeformten Bundabschnitt einfach und mit gleichmäßiger Abstützung der Tragkräfte am Federteller axial abgestützt sein.

Des weiteren kann zwischen der Innenhülse mit einem angeformten Flanschabschnitt und dem Federteller bzw. dessen angeformten Führungsabschnitt zur Vermeidung des Eindringens von Schmutz und Feuchtigkeit jeweils eine elastische Schutzmanschette angeordnet sein.

Zur zusätzlichen Beeinflussung der Federrate der Tragfeder kann in an sich bekannter Weise innerhalb des Innenringes um die Kolbenstange des Stoßdämpfers der Radaufhängung ein gummielastischer Anschlagpuffer vorgesehen sein, der unverstellbar am Aufbau des Kraftfahrzeuges abgestützt ist, wobei der Anschlagpuffer mit dem Schrittschaltwerk konstruktiv so abgestimmt ist, dass zumindest in der niedrigsten Niveaustellung der Karosserie des Kraftfahrzeuges der Anschlagpuffer in Wirkstellung gerät.

Fertigungstechnisch besonders günstig kann das Schrittschaltwerk mit dem integrierten Fluidraum als eine Montageeinheit ausgebildet sein, die mit dem Aufbau oder einem Radaufhängungselement des Kraftfahrzeuges verbindbar ist.

Schließlich kann die Montageeinheit bei einer Anordnung am Aufbau des Kraftfahrzeuges mit einer mit dem Aufbau verbindbaren, Radaufhängungselemente und ein Dämpferlager des Stoßdämpfers aufnehmenden Lagerkonsole verschraubbar sein.

Ein Ausführungsbeispiel der Erfindung ist im folgenden mit weiteren Einzelheiten näher erläutert. Die schematische Zeichnung zeigt in:
Fig. 1 einen Querschnitt durch eine teilweise dargestellte Radaufhängung eines Kraftfahrzeuges mit einer Tragfeder, einem Teleskop-Stopdämpfer, einem Anschlagpuffer und einer Höhenverstellvorrichtung mit einem Schrittschaltwerk;
Fig. 2 ein weiterer Querschnitt gemäß Fig. 1, wobei nur das Schrittschaltwerk der Höhenverstellvorrichtung als eine Montageeinheit gezeigt ist;
Fig. 3 das Schrittschaltwerk gemäß den Fig. 1 und 2 in raumbildlicher Darstellung und teilweise aufgebrochen;
Fig. 4 einen Schnitt entlang der Linie IV - IV der Fig. 3 durch den Stellring und die Führungshülse des Schrittschaltwerkes; und
Fig. 5 eine um 120 Grad der Führungshülse verlaufende Abwicklung der Geometrie der Führungskulisse des Schrittschaltwerkes.

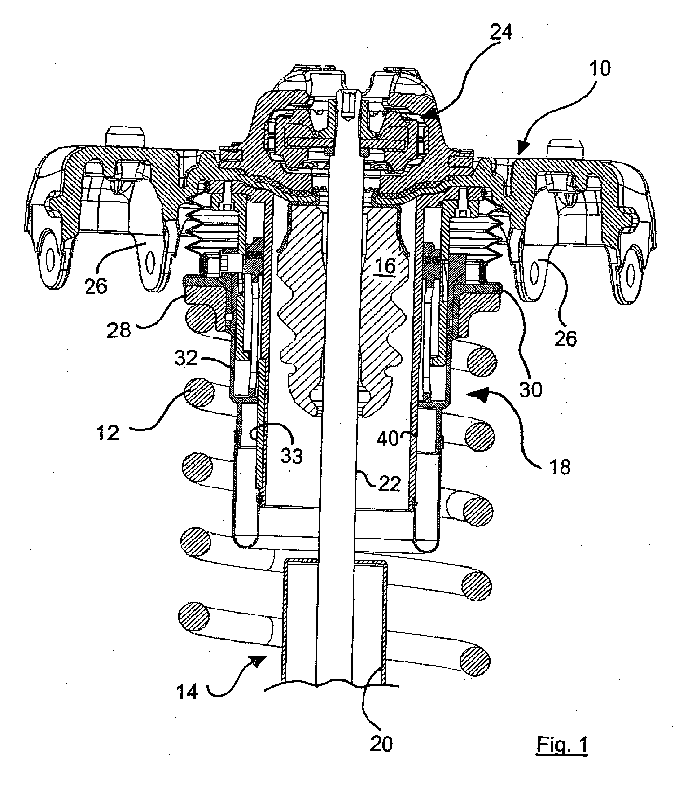

In der Fig. 1 ist teilweise eine Radaufhängung für ein Kraftfahrzeug dargestellt, mit im wesentlichen einer Lagerkonsole 10, einer Schraubendruckfeder als Tragfeder 12, einem nur teilweise ersichtlichen Teleskop-Stoßdämpfer 14, einem gummielastischen Anschlagpuffer 16 und einem innerhalb der Tragfeder 12 und radial außerhalb des Anschlagpuffers 16 liegenden, noch zu beschreibenden Schrittschaltwerk 18 als Höhenverstellvorrichtung zur Einstellung mehrerer Niveaustellungen der Karosserie des Kraftfahrzeuges relativ zur Fahrbahn. Die Lagerkonsole 10 ist in nicht dargestellter Weise mit dem Aufbau des Kraftfahrzeuges verschraubt.

Die Radaufhängung des Kraftfahrzeuges kann z. B. eine Federbeinachse sein, wobei das Zylindergehäuse 20 des Stopdämpfers 14 an einem nicht dargestellten Radträger oder radführenden Lenker befestigt ist, während die Kolbenstange 22 über ein nicht näher beschriebenes Dämpferlager 24 an der Lagerkonsole 10 angelenkt ist. Ferner sind an der Lagerkonsole 10 in bekannter Weise U-förmige Aufnahmen 26 ausgebildet, an denen radführende Lenker (nicht dargestellt) angelenkt sind.

Der um die Kolbenstange 22 angeordnete Anschlagpuffer 16 ist an der Lagerkonsole 10 festgelegt und gerät bei einer definierten Einfederung der Radaufhängung als Zusatzfeder wirkend mit dem Zylindergehäuse 20 in Kontakt.

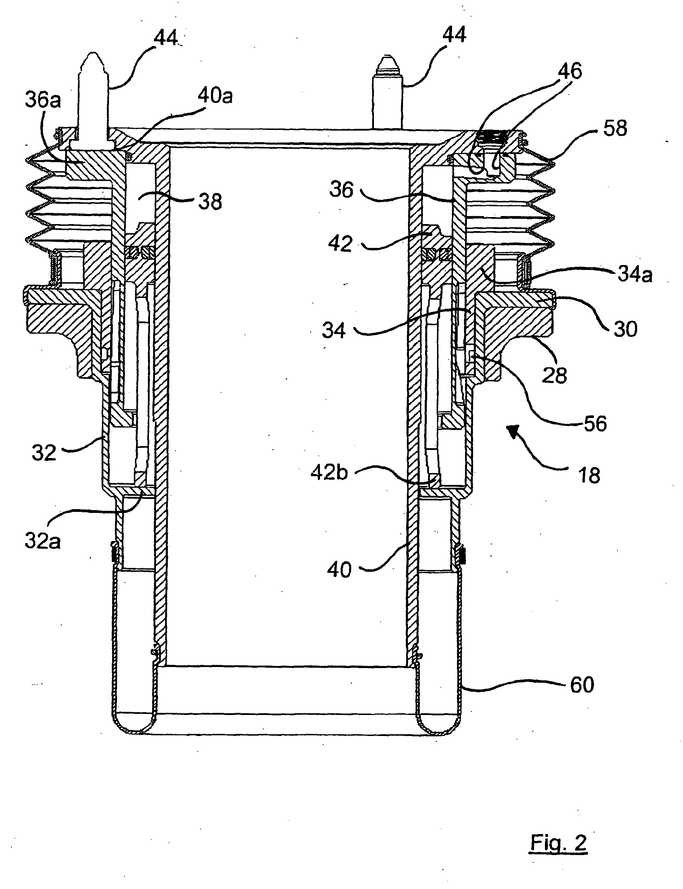

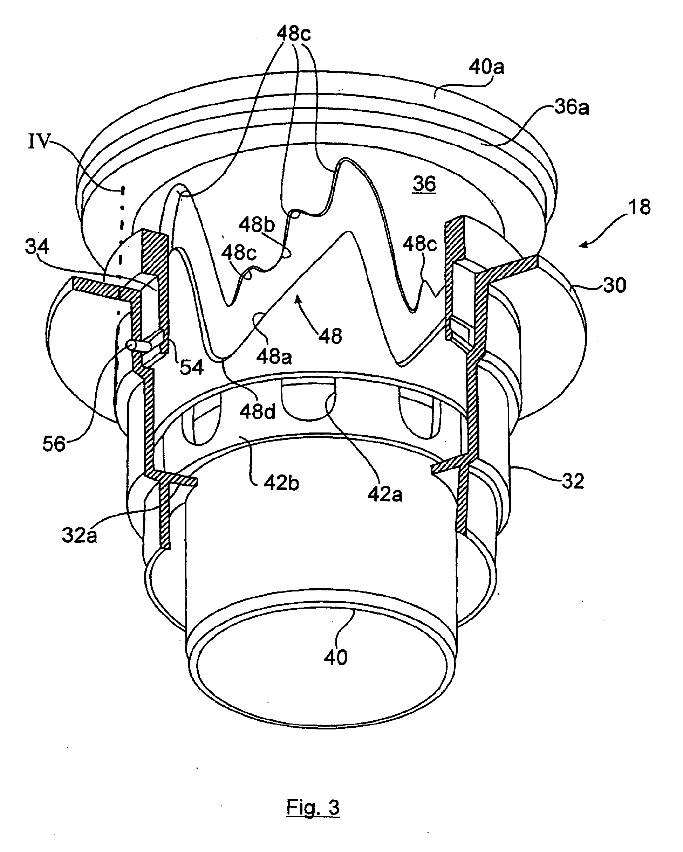

Gemäß den Fig. 2 und 3 setzt sich das Schrittschaltwerk 18 der Höhenverstellvorrichtung zusammen aus einem die Tragfeder 12 über einen gummielastischen Dämpfungsring 28 abstützenden Federteller 30 mit einem nach unten angeformten, rotationssymmetrischen Führungsabschnitt 32, einem im Führungsabschnitt 32 verdrehbar geführten Stellring 34, einer rotationssymmetrischen Führungshülse 36, einer zur Führungshülse 36 einen freien Ringraum 38 bildenden Innenhülse 40 und einem in den Ringraum 38 axial verschiebbar angeordneten, hülsenförmigen Stellkolben 42.

Die Innenhülse 40 und die Führungshülse 36 sind über angeformte Befestigungsflansche 40a, 36a ,mittels mehrerer Befestigungsschrauben 44 miteinander und mit der Lagerkonsole 10 fest verbunden. Die Innenhülse 40 und die Führungshülse 36 sind ihrerseits wiederum mit hier nicht dargestellten Schrauben verbunden.

Der zwischen der Führungshülse 36 und der Innenhülse 40 oberhalb des Stellkolbens 42 gebildete Ringraum 38 bildet einen Fluidraum bzw. eine Hydraulikkammer 38, die über in den Befestigungsflanschen 36a, 40a eingearbeitete Kanäle 46 an ein elektrohydraulisches Steuersystem mit einer Druckmittelquelle, einem hydraulischen Steuerventil und einem elektronischen Steuergerät zur Einstellung der Niveaustellungen der Karosserie des Kraftfahrzeuges in noch zu beschreibender Weise in Verbindung steht.

Der Stellkolben 42 weist in an sich bekannter Weise Ringdichtungen (ohne Bezugszeichen) zur flüssigkeitsdichten Abdichtung zwischen der Innenhülse 40 und der radial äußeren Führungshülse 36 auf. Ferner erstreckt sich ein an den Stellkolben 42 angeformter, mit Ausnehmungen 42a versehener, ringförmiger Stützabschnitt 42b nach unten und wirkt auf einen flanschförmigen, radial nach innen ragenden Abschnitt 32a des Führungsabschnittes 32 des Federtellers 30. Der Abschnitt 32a ist ferner über eine nicht dargestellte Nut-Feder-Verbindung unverdrehbar auf der Innenhülse 40 axial verschiebbar geführt.

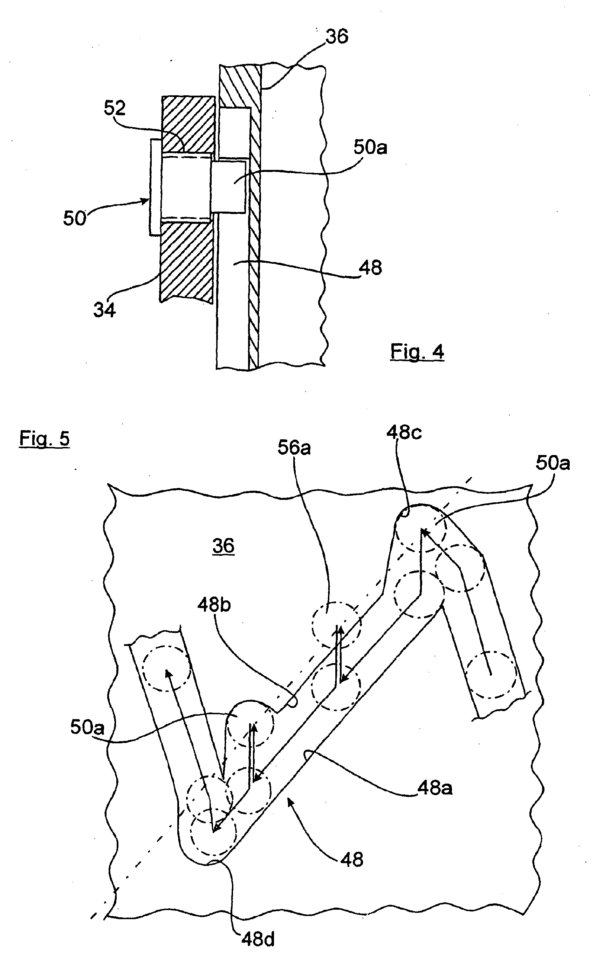

Wie insbesondere die Fig. 3 zeigt, ist in den Außenumfang der Führungshülse 36 eine umlaufende Stellkulisse 48 eingearbeitet, in die drei jeweils um 120 Grad versetzt zueinander angeordnete Gleitstifte 50 (vgl. auch Fig. 4) einragen. Die Gleitstifte 50 sind mittels einer Gewindeverbindung 52 in den Stellring 34 fest eingeschraubt, während deren zylindrischer Abschnitt 50a in die Stellkulisse 48 an deren unterer Stellflanke 48a und deren oberer Halteflanke 48b mit geringem Spiel anliegend einragen.

Des weiteren weist der Stellring 34 eine rotationssymetrische Außennut 54 auf, in die mehrere, in den Führungsabschnitt 32 des Federtellers 30 fest eingesetzte Führungsstifte 56 einragen. Der Stellring 34 ist also in dem Führungsabschnitt 32 verdrehbar, aber axial unverschiebbar geführt, wobei er sich zusätzlich mittels eines angeformten Bundabschnittes 34a in axialer Richtung an dem Federteller 30 abstützt.

Die Stellkulisse 48 weist über den Umfang der Führungshülse 36 drei geometrisch gleich ausgeführte Abschnitte über jeweils 120 Grad auf; die Fig. 5 zeigt in Abwicklung einen Abschnitt.

Wie ersichtlich ist, verlaufen die Flanken 48a, 48b der Stellkulisse 48 in einem definierten Winkel schräg zur Umfangsrichtung der Führungshülse 36, wobei in der oberen Halteflanke 48b drei pfannenartige Vertiefungen 48c eingearbeitet sind, die drei Niveaustellungen der Karosserie des Kraftfahrzeuges relativ zur Fahrbahn definieren; dabei entspricht die mittlere Vertiefung 48c dem Normalniveau, die obere Vertiefung 48c der Tiefniveaustellung und die untere Vertiefung 48c der Hochniveaustellung. Die Abschnitte 50a der Gleitstifte 50 rasten dabei einem Schrittschaltwerk entsprechend in die Vertiefungen 48c in noch zu beschreibender Weise ein, während sich der Stellring 34 kontinuierlich in einer Drehrichtung verstellt. Die Vertiefungen 48c können wie aus Fig. 5 ersichtlich mit entsprechenden Einführungsschrägen versehen sein, um ein sicheres Einrasten der Gleitstifte 50 in die Vertiefungen 48c sicherzustellen.
Es sei angenommen, das Kraftfahrzeug bzw. dessen Karosserie befindet sich in der Normalniveaustellung, das entspricht den mittleren Vertiefungen 48c der Stellkulisse 48, wobei die drei Gleitstifte 50 in den drei Vertiefungen 48c eingerastet sind. Mittels einer nicht dargestellten Positionserkennung, insbesondere einem Drehwinkelsensor zwischen dem Stellring 34 und dem Führungsabschnitt 32 des Federtellers 30, "erkennt" das elektronische Steuergerät diese Niveaustellung.

Soll nun z.B. auf die Hochniveaustellung umgeschaltet werden, so steuert das elektronische Steuergerät über das hydraulische Steuerventil in bekannter Weise Hydraulikdruck in die Hydraulikkammer 38 ein, wodurch der Stellkolben 42 nach unten verschoben wird.

Diese Verschiebung überträgt sich (vgl. insbesondere Fig. 3) über den Abschnitt 32a und den Führungsabschnitt 32 auf den Federteller 30 und somit auf die Tragfeder 12, die an ihrem unteren Ende (nicht dargestellt) z.B. am Zylindergehäuse 20 des Stoßdämpfers 14 abgestützt ist. Demzufolge wird die Karosserie des Kraftfahrzeuges angehoben.

Zugleich wird über die Stellflanken 48a der Stellkulisse 48 der Stellring 34 verdreht. Erreicht der Stellring 34 die Winkelposition, in der die der Hochniveaustellung entsprechenden Vertiefungen 48c (die unteren Vertiefungen 48c) den einragenden Abschnitten 50a der Gleitstifte 50 gegenüberliegen, so steuert das Steuergerät die Hydraulikkammer 38 wieder drucklos und die Gleitstifte 50 rasten in die korrespondierenden Vertiefungen 48c ein. Solange das Kraftfahrzeug in der Hochniveaustellung betrieben wird, ist keine weitere Ansteuerung oder Druckbeaufschlagung erforderlich.

Soll von der Hochniveaustellung wieder auf Normalniveau oder in die Tiefniveaustellung umgeschaltet werden, so wird in die Hydraulikkammer 38 solange Hydraulikdruck eingesteuert, bis der Stellring 34 über die Stellflanke 48a verdreht die tiefste Position (bei 48d) der Stellkulisse 48 erreicht. Dann wird die Hydraulikkammer 38 drucklos geschaltet (gleitend - zur Vermeidung von Schaltstößen), so dass die Gleitstifte 50 des Stellringes 34 relativ zur Führungshülse 36 wieder nach oben "fahren" und zunächst in die Vertiefungen 48c für die Tiefniveaustellung einrasten.

Ist jedoch die Normalniveaustellung einzustellen, so wird über das Steuergerät nach Erreichen der Tiefniveaustellung - erkannt über die angeführte Positionserkennung - sofort nochmals Hydraulikdruck eingesteuert und durch entsprechendes Verdrehen des Stellringes 34 wie vorbeschrieben wieder auf Normalniveau geschaltet.

Der Anschlagpuffer 16 ist mit dem Schrittschaltwerk 18 konstruktiv so abgestimmt, dass zumindest in der Tiefniveaustellung der Karosserie des Kraftfahrzeuges der Anschlagpuffer 16 am Zylindergehäuse 20 des Stoßdämpfers 14 in Wirkstellung gerät und somit die Federrate der Tragfeder 12 erhöht. Dies bewirkt eine sportlichere Abstimmung der Radaufhängung verbunden mit einer erhöhten Durchschlagsicherheit bei plötzlichen Fahrbahnunebenheiten.

Zwischen der Innenhülse 40 mit dem angeformten Flanschabschnitt 40a und dem Federteller 30 bzw. dessen angeformten Führungsabschnitt 32 ist jeweils eine elastische Schutzmanschette 58, 60 angeordnet, um einem Eindringen von Schmutz und/oder Feuchtigkeit entgegenzuwirken.

Wie insbesondere aus Fig. 2 ersichtlich ist, ist die Höhenverstellvorrichtung mit dem Schrittschaltwerk 18 als eine Montageeinheit ausgeführt, die ggf. bei einem Kraftfahrzeug ohne Niveauverstellung durch ein einfaches Adapterteil mit einem in Normalniveaustellung positioniertem Federteller 30 ersetzt werden kann.

Die Erfindung ist nicht auf das dargestellte Ausführungsbeispiel begrenzt. So können zur Positionserkennung des Stellringes 34 auch der Füllstand des Fluidraumes 38 oder die axiale Position des Stellkolbens 42 mit dem Stützabschnitt 42b erfasst werden. Anstelle einer hydraulischen Betätigung kann der Stellkolben 42 auch pneumatisch beaufschlagt sein.

Anstelle dreier Niveaustellungen können auch zwei oder mehr als drei Niveaustellungen vorgesehen sein, wobei die Stellkulisse 48 entsprechend zu modifizieren wäre.

Die Erfindung ist auch an Radaufhängungen anwendbar, bei denen der Stoßdämpfer 14 außerhalb der Tragfeder 12 angeordnet ist. Anstelle des aufbauseitigen Federtellers 30 kann auch der am Gehäuse 20 des Stoßdämpfers 14 abgestützte Federteller (nicht dargestellt) über die Verstellvorrichtung 18 wie vorbeschrieben verstellt werden. Dabei ist sich die in Fig. 2 gezeigte Montageeinheit 18 um 180 Grad gestürzt vorzustellen und die Innenhülse 40 wäre nicht am Aufbau, sondern am Gehäuse 20 des Stoßdämpfers 14 in geeigneter Weise befestigt.

## Patentansprüche

1. Höhenverstellvorrichtung für Radaufhängungen von Kraftfahrzeugen, mit einer zwischen dem Federteller (30) einer Tragfeder (12) und dem Aufbau oder einem Radaufhängungselement des Kraftfahrzeugs geschalteten Verstelleinrichtung (18), die einen druckbeaufschlagbaren Fluidraum (38) mit einem Stellkolben (42) aufweist, der bei einer Druckbeaufschlagung unterschiedliche Niveaustellungen der Karosserie des Kraftfahrzeugs bewirkt, wobei der Verstelleinrichtung (18) ein Schrittschaltwerk (34, 36, 50a) zugeordnet ist, das die durch Druckbeaufschlagung des Fluidraums (38) eingestellte Niveaustellung bei anschließend drucklos geschaltetem Fluidraum (38) hält, **dadurch gekennzeichnet, dass** das Schrittschaltwerk (18) einen am Federteller (30) verdrehbar geführten Stellring (34) aufweist, der mittels einer Stellkulisse (48) einer am Aufbau oder am Radaufhängungselement abgestützten Führungshülse (36) geführt ist.

2. Höhenverstellvorrichtung nach Anspruch 1 oder 2, **dadurch gekennzeichnet, dass** der Stellkolben (42) als Ringkolben entlang einer Innenhülse (40) axial verschiebbar geführt ist.

3. Höhenverstellvorrichtung nach einem der vorhergehenden Ansprüche, **dadurch gekennzeichnet, dass** der Stellkolben (42) auf einen zylindrischen Führungsabschnitt (32) des Federtellers (30) wirkt.

4. Höhenverstellvorrichtung nach einem der Ansprüche 1 bis 3, **dadurch gekennzeichnet, dass** um den Umfang der Führungshülse (36) drei zueinander identische Stellkulissen (48) eingearbeitet sind, in die drei in den Stellring (34) um jeweils 120 Grad versetzte Gleitstifte (50) einragen.

5. Höhenverstellvorrichtung nach einem der Ansprüche 1 bis 4, **dadurch gekennzeichnet, dass** die in Umfangsrichtung der Führungshülse (36) schräg verlaufenden, nutförmigen Stellkulissen (48) jeweils eine mit Gleitstiften (50) zusammenwirkende Stellflanke (48a) und eine gegenüberliegende Halteflanke (48b) aufweisen.

6. Höhenverstellvorrichtung nach einem der vorhergehenden Ansprüche, **dadurch gekennzeichnet, dass** mittels des Schrittschaltwerkes (18) durch Höhenanschläge (48c), insbesondere pfannenartige Vertiefungen (48c) in Halteflanken (48b) der Stellkulissen (48), die unterschiedlichen Niveaustellungen festlegbar sind.

7. Höhenverstellvorrichtung nach einem der vorhergehenden Ansprüche, **dadurch gekennzeichnet, dass** zur Druckbeaufschlagung und Druckentlastung des Fluidraumes (38) bei Umschaltung der Niveaustellungen die Position des Stellringes (34) direkt oder indirekt erfassbar und steuerungstechnisch auswertbar ist.

8. Höhenverstellvorrichtung nach Anspruch 7, **dadurch gekennzeichnet, dass** die Drehwinkellage des Stellringes (34) relativ zur Führungshülse (36) oder zum Federteller (30) mittels eines Drehwinkelsensors erfasst ist.

9. Höhenverstellvorrichtung nach einem der Ansprüche 3 bis 8, **dadurch gekennzeichnet, dass** der Stellkolben (42) mit einem entgegengesetzt dem Fluidraum (38) angeordneten Stützabschnitt (42b) axial unterhalb der Stellkulissen (48) in der Führungshülse (36) mit dem Führungsabschnitt (32) des Federtellers (30) zusammenwirkt.

10. Höhenverstellvorrichtung nach einem der vorhergehenden Ansprüche, **dadurch gekennzeichnet, dass** der Stellring (34) mit einem angeformten Bundabschnitt (34a) am Federteller (30) axial abgestützt ist.

11. Höhenverstellvorrichtung nach einem der Ansprüche 2 bis 10, **dadurch gekennzeichnet, dass** zwischen der Innenhülse (40) mit einem angeformten Befestigungsflansch (40a) und dem Federteller (30) bzw. einem daran angeformten Führungsabschnitt (32) jeweils eine elastische Schutzmanschette (58, 60) angeordnet ist.

12. Höhenverstellvorrichtung nach einem der Ansprüche 2 bis 11, **dadurch gekennzeichnet, dass** innerhalb der Innenhülse (40) um eine Kolbenstange (22) eines Stoßdämpfers (14) der Radaufhängung ein gummielastischer Anschlagpuffer (16) vorgesehen ist, der unverstellbar am Aufbau des Kraftfahrzeuges abgestützt ist und dass der Anschlagpuffer (16) mit dem Schrittschaltwerk (18) konstruktiv so abgestimmt ist, dass zumindest in der niedrigsten Niveaustellung der Karosserie des Kraftfahrzeuges der Anschlagpuffer (16) in Wirkstellung gerät.

13. Höhenverstellvorrichtung nach einem der vorhergehenden Ansprüche, **dadurch gekennzeichnet, dass** das Schrittschaltwerk (18) mit dem integrierten Fluidraum (38) als eine Montageeinheit ausgebildet ist, die mit dem Aufbau oder einem Radaufhängungselement des Kraftfahrzeuges verbindbar ist.

14. Höhenverstellvorrichtung nach Anspruch 13, **dadurch gekennzeichnet, dass** die Montageeinheit mit einer mit dem Aufbau des Kraftfahrzeuges verbindbaren, Radaufhängungselemente und ein Dämpferlager (24) eines Stoßdämpfers (14) aufnehmenden Lagerkonsole (10) verschraubbar ist.

## Claims

1. Height adjustment device for wheel suspensions of motor vehicles, comprising an adjustment means (18) which is connected between the spring plate (30) of a bearing spring (12) and the body or a wheel suspension element of the motor vehicle and which comprises a fluid space (38) which can be pressurised and comprises an adjusting piston (42) which, upon pressurisation, brings about different level settings of the body of the motor vehicle, the adjustment means (18) being assigned a step-by-step system (34, 36, 50a) which maintains the level setting set by pressurisation of the fluid space (38) when the fluid space (38) is then switched to un unpressurised state, **characterised in that** the step-by-step system (18) comprises an adjusting ring (34) which is guided in a rotatable manner at the spring plate (30) and is guided by means of an adjusting link (48) of a guide sleeve (36) which is supported on the body or on the wheel suspension element.

2. Height adjustment device according to either claim 1 or claim 2, **characterised in that** the adjusting piston (42) is guided as an annular piston in an axially displaceable manner along an inner sleeve (40).

3. Height adjustment device according to any of the preceding claims, **characterised in that** the adjusting piston (42) acts on a cylindrical guide portion (32) of the spring plate (30).

4. Height adjustment device according to any of claims 1 to 3, **characterised in that** three identical adjusting links (48) are incorporated around the periphery of the guide sleeve (36), into which links three slide pins (50), each offset by 120 degrees in the adjusting ring (34), project.

5. Height adjustment device according to any of claims 1 to 4, **characterised in that** the groove-shaped adjusting links (48), which extend obliquely in the peripheral direction of the guide sleeve (36), each have an adjusting flank (48a), which interacts with slide pins (50), and an opposing holding flank (48b).

6. Height adjustment device according to any of the preceding claims, **characterised in that** the different level settings can be fixed by means of the step-by-step system (18) via vertical stops (48c), in particular cup-like recesses (48c) in holding flanks (48b) of the adjusting links (48).

7. Height adjustment device according to any of the preceding claims, **characterised in that** the position of the adjusting ring (34) can be detected directly or indirectly and can be evaluated in terms of control for pressurising and depressurising the fluid space (38) when switching the level settings.

8. Height adjustment device according to claim 7, **characterised in that** the rotation angle position of the adjusting ring (34) relative to the guide sleeve (36) or to the spring plate (30) is detected by means of a rotation angle sensor.

9. Height adjustment device according to any of claims 3 to 8, **characterised in that** a support portion (42b) of the adjusting piston (42), which support portion is arranged at the opposite end from the fluid space (38), axially below the adjusting links (48) in the guide sleeve (36), interacts with the guide portion (32) of the spring plate (30).

10. Height adjustment device according to any of the preceding claims, **characterised in that** a collar portion (34a) integrally formed on the adjusting ring (34) is axially supported on the spring plate (30).

11. Height adjustment device according to any of claims 2 to 10, **characterised in that** a resilient boot (58, 60) is arranged between the inner sleeve (40), having a fastening flange (40a) integrally formed thereon, and the spring plate (30) or a guide portion (32) integrally formed thereon.

12. Height adjustment device according to any of claims 2 to 11, **characterised in that** a rubber-elastic bump stop (16), which is supported in a non-displaceable manner on the body of the motor vehicle, is provided inside the inner sleeve (40), around a piston rod (22) of a shock absorber (14) of the wheel suspension, and **in that** the design of the bump stop (16) is coordinated with the step-by-step system (18) such that the bump stop (16) enters an active position at least in the lowest level setting of the body of the motor vehicle.

13. Height adjustment device according to any of the preceding claims, **characterised in that** the step-by-step system (18), with the integrated fluid space (38), is designed as an assembly unit which can be connected to the body or a wheel suspension element of the motor vehicle.

14. Height adjustment device according to claim 13, **characterised in that** the assembly unit can be screwed to a bearing bracket (10) which can be connected to the body of the motor vehicle and receives wheel suspension elements and a damper bearing (24) of a shock absorber (14).

## Revendications

1. Dispositif de réglage en hauteur pour suspensions de roues de véhicules automobiles, comprenant un dispositif de réglage (18) couplé entre la cuvette de ressort (30) d'un ressort porteur (12) et la carrosserie ou un élément de suspension de roue du véhicule automobile, lequel dispositif présente un espace de fluide (38) qui peut être soumis à une pression avec un piston de réglage (42), qui, lors d'une sollicitation à la pression, induit différentes positions de niveau de la carrosserie du véhicule automobile, dans lequel est affecté au dispositif de réglage (18) un mécanisme pas à pas (34, 36, 50a) qui maintient la position de niveau réglée par sollicitation à la pression de l'espace de fluide (38) lorsque l'espace de fluide (38) est couplé sans pression à la suite, **caractérisé en ce que** le mécanisme pas à pas (18) présente un anneau de réglage (34) guidé à la torsion sur la cuvette de ressort (30), lequel anneau est guidé au moyen d'une coulisse de réglage (38) d'une douille de guidage (36) qui s'appuie sur la carrosserie ou sur l'élément de suspension de roue.

2. Dispositif de réglage en hauteur selon la revendication 1 ou la revendication 2, **caractérisé en ce que** le piston de réglage (42) est guidé en déplacement axial sous la forme d'un piston annulaire le long d'une douille interne (40).

3. Dispositif de réglage en hauteur selon l'une quelconque des revendications précédentes, **caractérisé en ce que** le piston de réglage (42) agit sur une section de guidage cylindrique (32) de la cuvette de ressort (30).

4. Dispositif de réglage en hauteur selon l'une quelconque des revendications 1 à 3, **caractérisé en ce qu'**il y a trois coulisses de réglage (48) mutuellement identiques qui opèrent sur la périphérie de la douille de guidage (36) et dans lesquelles trois broches coulissantes (50) décalées dans l'anneau de réglage (34) de respectivement 120 degrés font saillie.

5. Dispositif de réglage en hauteur selon l'une quelconque des revendications 1 à 4, **caractérisé en ce que** les coulisses de réglage (48 en forme de rainures s'étendant en oblique dans la direction périphérique de la douille de guidage (36) présentent respectivement un flanc de réglage (48a) coopérant avec des broches coulissantes (50) et un flanc de support opposé (48b).

6. Dispositif de réglage en hauteur selon l'une quelconque des revendications précédentes, **caractérisé en ce que** l'on peut définir les différentes positions de niveau au moyen du mécanisme pas à pas (18) par des butées en hauteur (48c), en particulier des renfoncements en forme de poches (48c) dans les flancs de support (48b) des coulisses de réglage (48).

7. Dispositif de réglage en hauteur selon l'une quelconque des revendications précédentes, **caractérisé en ce que**, pour la sollicitation à la pression et la détente de pression de l'espace de fluide (38) lors de la commutation des positions de niveau, la position de l'anneau de réglage (34) peut être acquise directement ou indirectement et peut être exploitée au plan de la technique de commande.

8. Dispositif de réglage en hauteur selon la revendication 7, **caractérisé en ce que** la position de l'angle de rotation de l'anneau de réglage (34) par rapport à la douille de guidage (36) ou à la cuvette de ressort (30) est acquise au moyen d'un capteur d'angle de rotation.

9. Dispositif de réglage en hauteur selon l'une quelconque des revendications 3 à 8, **caractérisé en ce que** le piston de réglage (42) avec une section d'appui (42b) aménagée à l'opposé de l'espace de fluide (38) coopère axialement en dessous des coulisses de réglage (48) dans la douille de guidage (36) avec la section de guidage (32) de la cuvette de ressort (30).

10. Dispositif de réglage en hauteur selon l'une quelconque des revendications précédentes, **caractérisé en ce que** l'anneau de réglage (34) s'appuie par une section de collet (34a) qui y est formée axialement sur la cuvette de ressort (30).

11. Dispositif de réglage en hauteur selon l'une quelconque des revendications 2 à 10, **caractérisé en ce qu'**une manchette de protection élastique (58, 60) est aménagée entre la douille (40) avec un flasque de fixation (40a) qui y est formée et la cuvette de ressort (30) ou une section de guidage (32) qui y est formée, respectivement.

12. Dispositif de réglage en hauteur selon l'une quelconque des revendications 2 à 11, **caractérisé en ce qu'**il est prévu à l'intérieur de la douille interne (40) autour de la tige de piston (22) d'un amortisseur de chocs (14) de la suspension de roue un tampon de butée (16) élastique comme le caoutchouc, qui s'appuie de manière fixe sur la carrosserie du véhicule automobile et **en ce que** le tampon de butée (16) est ajusté au mécanisme pas à pas (18) au plan de la construction de façon qu'au moins dans la position de niveau la plus basse de la carrosserie du véhicule automobile, le tampon de butée (16) se retrouve en position active.

13. Dispositif de réglage en hauteur selon l'une quelconque des revendications précédentes, **caractérisé en ce que** le mécanisme pas à pas (18) avec l'espace de fluide intégré (38) se présente sous la forme d'une unité de montage qui peut être raccordée à la carrosserie ou à un élément de suspension de roue du véhicule automobile.

14. Dispositif de réglage en hauteur selon la revendication 13, **caractérisé en ce que** l'unité de montage peut être vissée sur une console de palier (10) raccordable à la carrosserie du véhicule automobile et recevant des éléments de suspension de roue et un palier d'amortisseur (24) d'un amortisseur de chocs (14).
